# EUROPEAN PATENT APPLICATION

(11) **EP 3 842 463 A1**
(43) Date of publication of application: **30.06.2021**
(21) Application number: 20208957.9
(22) Date of filing: 20.11.2020
(51) Int. Cl.: C08F 110/02

(54) **PREPARATION METHOD OF CATALYST FOR ETHYLENE POLYMERIZATION**

(30) Priority: 24.12.2019 KR 20190174007
(71) Applicant: Hanwha Total Petrochemical Co., Ltd., Chungcheongnam-do (KR)
(72) Inventor: LEE, Seung Yeop, Chungcheongnam-do (KR); LEE, Jin Woo, Chungcheongnam-do (KR)
(74) Representative: Brevalex

(57) **Abstract**

Disclosed is a method for preparing a solid catalyst capable of controlling a molecular weight distribution and polydispersity according to an organic compound as used in a polymerization reaction, in which the solid catalyst contains titanium tetrachloride and a diester or diether organic compound. The catalyst having excellent polymerization activity, and allowing uniform particle size and high apparent density of the ultra-high molecular weight polyethylene, and easily controlling the molecular weight distribution and polydispersity of the ultra-high molecular weight polyethylene may be prepared simply and efficiently.

## Description

### CROSS-REFERENCE TO RELATED APPLICATIONS

This application claims the benefit and priority of Korean Patent Application No. 10-2019-0174007, filed on December 24, 2019. The entire disclosure of the above application is incorporated herein by reference.

### TECHNICAL FIELD

The present disclosure relates to a preparing method of magnesium-supported titanium solid catalyst to produce ultra-high molecular weight polyethylene. The present disclosure relates to a method of preparing a solid catalyst that may control a molecular weight distribution and polydispersity according to an organic compound as used in a polymerization reaction, in which the solid catalyst contains titanium tetrachloride and a diester or diether organic compound.

### BACKGROUND

The ultra-high molecular weight polyethylene (UHMEP) means polyethylene with a weight average molecular weight of 250,000 to 10,000,000 g/mol. Because the molecular weight thereof is very large compared to that of general-purpose polyethylene, the ultra-high molecular weight polyethylene has excellent properties such as stiffness, abrasion resistance, chemical resistance and electrical properties. Because the ultra-high molecular weight polyethylene among thermoplastic engineering plastics has excellent mechanical properties and wear resistance, not only has the UHMEP been used for mechanical parts that require wear resistance, such as gears, bearings, and cams, the UHMEP has been also used as a material for artificial joints, especially because of excellent wear resistance, impact strength and biocompatibility thereof.

The UHMEP has a very high molecular weight and thus has little flow in a molten state and thus is produced in a powder form. Therefore, particle sizes and distribution of powders and apparent density thereof are very important. The ultra-high molecular weight polyethylene may not be subjected to a melting process and thus may be dissolved in an appropriate solvent. Powders with large particle sizes may impair dissolution properties. Further, when the apparent density is low, powder transport may be difficult. Thus, the particle size and the apparent density of the powders act as important factors affecting productivity in a production process.

Properties and processability of polyolefin materials are affected by a polydispersity of a molecular weight distribution. In general, the narrower the polydispersity, the better the physical properties and odor characteristics, but the poorer the processability and environmental stress resistance. The wider the polydispersity, the better the processability and environmental stress resistance, but the poorer the physical properties and odor characteristics.

In polypropylene, a molecular weight distribution thereof is controlled by controlling an electron donor of the Ziegler-Natta catalyst as used. In polyethylene, where a role of the electron donor is unknown, the polydispersity thereof is controlled by changing the catalyst to chromium or metallocene instead of the Ziegler-Natta catalyst. Otherwise, a method for producing polyethylene having a double molecular weight distribution using a multi-stage reactor or a mixture of two or more catalysts is mainly used.

Preparation of a Ziegler-Natta catalyst containing magnesium and titanium compound and preparation method of ultra-high molecular weight polyethylene using the same have been reported in several patents. Korean Patent No. 0822616 discloses a method for preparing a catalyst containing magnesium, titanium and silane compound which is capable of being used for preparing an ultra-high molecular weight polyolefin polymer having a uniform particle size distribution at a high catalyst activity. However, the polymer should be improved in terms of the apparent density. U.S. Patent No. 4,962,167 discloses a method for preparing a catalyst for production of ultra-high molecular weight polyethylene, the method including reacting a magnesium halide compound, a titanium alkoxide, an aluminum halide and a silicon alkoxide compound; however, the catalyst is characterized by relatively low catalyst activity and the resulting polymer has low apparent density. US Patent No. 5,587,440 discloses a method for preparing ultra-high molecular weight polyethylene having a uniform particle size distribution and high apparent density using a catalyst obtained by reacting a titanium compound with organoaluminum. However, there is a disadvantage that the polymerization activity of the catalyst is low.

In Korean Patent No. 1959694, two different catalysts were mixed to control molecular weight distribution and polydispersity. However, the catalyst is limited to a metallocene single activity point catalyst. In U.S. Patent No. 9725535, polydispersity was controlled by using a Ziegler-Natta catalyst having two or more active metals, but the polydispersity had a limitation of only up to 4.5. U.S. Patent No. 8557935 reported a catalyst composition allowing a polydispersity of 15 or higher, as obtained by mixing a Ziegler-Natta catalyst and a metallocene catalyst. However, the catalyst composition has a disadvantage of low activity. Further, this type of a catalyst combination method is unsuitable for application to ultra-high molecular weight polyethylene where uniform particle size and high apparent density of the polymerized powder are essential.

Therefore, a purpose of the present disclosure is to provide a method for preparing a catalyst to allow easy control of molecular weight distribution and polydispersity while satisfying uniform particle size distribution, high apparent density, and high polymerization activity as required characteristics of ultra-high molecular weight polyethylene.

### SUMMARY

The present disclosure has been made in an effort to provide a simple and efficient method of preparing a catalyst that may easily control the molecular weight distribution and polydispersity of ultra-high molecular weight polyethylene while having the excellent polymerization activity, and allowing uniform particle size and high apparent density of the ultra-high molecular weight polyethylene.

The method of preparing the catalyst for preparing ultra-high molecular weight polyethylene capable of achieving the purpose is characterized by including:
(1) reacting magnesium dichloride (MgCl₂) with alcohol to prepare a magnesium compound solution;
(2) reacting titanium tetrachloride with the magnesium compound solution prepared in the step (1) to prepare a precursor; and
(3) reacting the precursor with titanium tetrachloride to form a first reacted precursor, and then secondarily reacting the first reacted precursor with a diether compound represented by a following general formula (I) or a diester compound represented by a following general formula (II) or a mixture of the diether compound and the diester compound to prepare a catalyst:

R₁OCR₂COR₃ ...... (I)

R₁OOCR₂COOR₃ ...... (II)

where each of R₁ and R₃ represents a linear or branched alkyl group having 1 to 10 carbon atoms, and R₂ represents a linear or branched alkyl group having 1 to 20 carbon atoms.

The polymerization reaction of the present disclosure is carried out using a magnesium-supported titanium catalyst prepared by the method and an organometallic compound of Groups II and III of the periodic table.

In the present disclosure, a beneficial organometallic compound used as a co-catalyst in the polyethylene polymerization may be represented by a general formula of MRn, where M is a periodic table group II or IIIA metal component such as magnesium, calcium, zinc, boron, aluminum, and gallium, R represents an alkyl group having 1 to 20 carbon atoms such as methyl, ethyl, butyl, hexyl, octyl and decyl, and n represents a valence of the metal component. A more preferable organometallic compound may include trialkyl aluminum having an alkyl group having 1 to 6 carbons such as triethyl aluminum and triisobutyl aluminum, or a mixture of trialkyl aluminum. This organometallic compound may be useful for activation of the catalyst and removal of impurities from a polymerizing reactor. In some cases, the organoaluminum compound may include ethyl aluminum dichloride, diethyl aluminum chloride, ethyl aluminum sesquichloride, and diisobutyl aluminum hydride.

The polymerization reaction may include gas phase or bulk polymerization in absence of an organic solvent or liquid slurry polymerization in presence of an organic solvent. These polymerizations are performed in absence of oxygen, water, and other compounds that may act as catalytic poisons. Examples of the organic solvent may include alkanes or cycloalkanes such as pentane, hexane, heptane, n-octane, isooctane, cyclohexane, and methylcyclohexane; alkylaromatics such as toluene, xylene, ethylbenzene, isopropylbenzene, ethyltoluene, n-propylbenzene, diethylbenzene; halogenated aromatics such as chlorobenzene, chloronaphthalene and ortho-dichlorobenzene; and mixtures thereof. The examples of the solvent may be useful for removing polymerization heat and obtaining high catalyst activity.

The present disclosure provides a simple and efficient method of preparing a catalyst that may easily control the molecular weight distribution and polydispersity of ultra-high molecular weight polyethylene while having excellent polymerization activity, and allowing the uniform particle size and high apparent density of the ultra-high molecular weight polyethylene.

The foregoing summary is illustrative only and is not intended to be in any way limiting. In addition to the illustrative aspects, embodiments, and features described above, further aspects, embodiments, and features will become apparent by reference to the drawings and the following detailed description.

### DETAILED DESCRIPTION

The present disclosure will be described in more detail based on following Examples. However, these Examples are for illustrative purposes only, and the present disclosure is not limited to these Examples.

### Examples

### Example 1

### [Preparation of solid catalyst for preparation of ultra-high molecular weight polyethylene]

### Step (1): Preparation of magnesium halide alcohol adduct solution

After replacing an atmosphere of a 1 L reactor equipped with a mechanical stirrer with a nitrogen atmosphere, 20 g of solid magnesium dichloride (MgCl₂), 120 ml of toluene, and 60 ml of normal butanol were added to the reactor and stirred at 350 rpm. After raising a temperature to 65°C for 1 hour, the reactor was maintained for 2 hours to obtain a uniform magnesium halide alcohol adduct solution that was well dissolved in a solvent.

### Step (2): Preparation of magnesium halide carrier

After cooling the temperature of the solution prepared in step (1) to 20°C, 20 ml of TiCl₄ was slowly injected thereto for 40 minutes (0.5 ml/min). Then, 62.5 ml of TiCl₄ was injected thereto more rapidly for 100 minutes (0.625 ml/min). At this time, the temperature was carefully maintained so that the temperature of the reactor did not rise 25°C or higher. When the injection was completed, the temperature of the reactor was raised to 60°C for 1 hour and was further maintained for 1 additional hour. When all processes were completed, the reactor was allowed to stand and a solid component was completely settled and then a supernatant was removed, and then the solid component in the reactor was washed and precipitated once with 300 ml of toluene to completely remove liquid impurities. Thus, a clean magnesium chloride carrier was obtained as a solid.

### Step (3): Preparation of catalyst carrying titanium and 2-isopropyl-2-(1-methylbutyl)-1,3-dimethoxypropane

200 ml of toluene was added to the magnesium chloride carrier, and the mixture was maintained 25°C while stirring the mixture at 250 rpm. Then, 27 ml of TiCl₄ was injected thereto at a time and the mixture was maintained for 1 hour to perform a first reaction. After injecting 36.2 mmol of 2-isopropyl-2-(1-methylbutyl)-1,3-dimethoxypropane thereto, the reactor temperature was raised to 60°C and the reactor was maintained for 1 hour to perform a second reaction between TiCl₄ and the carrier. Then, the reactor was allowed to stand to completely settle the solid component and then a supernatant was removed. The prepared solid catalyst was washed and precipitated once with 200 ml of toluene and 6 times with 200 ml of hexane to remove impurities.

### [Ultra-high molecular weight polyethylene polymerization]

A nitrogen atmosphere was created in a 2-liter batch reactor by alternately injecting nitrogen and vacuum three times into the 2-liter batch reactor. After 1000 ml of hexane was injected into the reactor, 1 mmol of triethylaluminum and 0.005 mmol of the solid catalyst based on a titanium atom were injected into the reactor. After 9 psi of hydrogen was injected thereto, a temperature of the reactor was raised to 80°C while stirring the mixture therein at 700 rpm. Then, an ethylene pressure was adjusted to 120 psig, followed by slurry polymerization for 90 minutes. After the polymerization was completed, a temperature of the reactor was lowered to room temperature. Hexane slurry containing a resulting polymer was filtered and dried to obtain a white powdery polymer.

The polymerization activity (kg-PE/g-catalyst) was calculated as a weight ratio of the polymer as produced per an amount of the catalyst as used.

The particle size distribution of the polymer was measured using a laser particle analyzer (Mastersizer X, Malvern Instruments). As a result, the average particle size thereof was D (v, 0.5), and the particle size distribution thereof was expressed as (D (v, 0.9) - D (v, 0.1)) / D (v, 0.5), where D (v, 0.5) represents a median size of particles contained in the sample, and D (v, 0.9) and D (v, 0.1) mean a particle size at 90% and 10% locations based on the size distribution, respectively. The smaller the number of particle size distributions, the narrower the particle size distribution.

M_{w} (weight average molecular weight) and Mₙ (number average molecular weight) and polydispersity (Polydispersity Index, PDI, Mw/Mn) of the polymer were measured and analyzed by gel permeation chromatography.

The polymerization results are shown in Table 1 together with the apparent density (g/ml) of the polymer.

### Example 2

Example 2 was performed in the same manner as in Example 1, except that 2-isopropyl-2-(1-methylbutyl)-1,3-dimethoxypropane in Example 1 was changed to 36.2 mmol of diethyl succinate.

### Example 3

Example 3 was performed in the same manner as in Example 1, except that 2-isopropyl-2-(1-methylbutyl)-1,3-dimethoxypropane in Example 1 was changed to 36.2 mmol of diethyl malonate.

### Comparative Example 1

Comparative Example 1 was performed in the same manner as in Example 1, except that 2-isopropyl-2-(1-methylbutyl)-1,3-dimethoxypropane in Example 1 was not used.

**[Table 1]**

| **Examples** | **Titanium content in catalyst (weight %)** | **Activity** (kg-PE/g-**catalyst)** | **Apparent density** (g/ml) | **Molecular weight** (M_{w}) (10⁶g/mol) | **Polydispersity** (PDI) | **Average particle size** (µm) | **Particle size distribution** |
|---|---|---|---|---|---|---|---|
| **Example 1** | 2.8 | 29.4 | 0.41 | 5.7 | 3.1 | 142 | 0.63 |
| **Example 2** | 3.1 | 26.5 | 0.42 | 5.9 | 5.1 | 131 | 0.79 |
| **Example 3** | 2.7 | 27.5 | 0.41 | 5.6 | 4.7 | 133 | 0.80 |
| **Comparative Example 1** | 7.5 | 13.2 | 0.33 | 5.3 | 3.8 | 240 | 1.3 |

As shown in Table 1, it may be seen that the catalyst prepared by the methods of Examples 1 to 3 has excellent polymerization activity and allows a uniform particle size distribution and high apparent density of the polymer, compared to the catalyst prepared by the method of Comparative Example 1. Further, the polydispersity of the molecular weight distribution may be selectively adjusted according to the type of the organic compound as used.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A preparation method of a catalyst for producing ultra-high molecular weight polyethylene, the method comprising:
(1) reacting magnesium dichloride (MgCl₂) with alcohol to prepare a magnesium compound solution;
(2) reacting titanium tetrachloride with the magnesium compound solution prepared in the step (1) to prepare a precursor; and
(3) reacting the precursor with the titanium tetrachloride to form a first reacted precursor, and then secondarily reacting the first reacted precursor with a diether compound represented by a following general formula (I) or a diester compound represented by a following general formula (II) or a mixture of the diether compound and the diester compound to prepare the catalyst:
R₁OCR₂COR₃ ...... (I)
R₁OOCR₂COOR₃ ...... (II)
where each of R₁ and R₃ represents a linear or branched alkyl group having 1 to 10 carbon atoms, and R₂ represents a linear or branched alkyl group having 1 to 20 carbon atoms.

2. The method of claim 1, wherein the alcohol is a primary alcohol having 2 to 10 carbon atoms.
